# EUROPEAN PATENT APPLICATION

(11) **EP 0 919 942 A2**
(43) Date of publication of application: **02.06.1999**
(21) Application number: 98309747.8
(22) Date of filing: 27.11.1998
(51) Int. Cl.: G06F 17/60

(54) **Database relationship analysis and strategy implementation tool**

(30) Priority: 28.11.1997 GB 9725347
(71) Applicant: NCR INTERNATIONAL INC., Dayton, Ohio 45479 (US)
(72) Inventor: Sykes, Anthony, East Melbourne, Victoria (AU); O'Brien, Raymond Patrick, Glen Iris, Victoria 3146 (AU)
(74) Representative: Cleary, Fidelma

(57) **Abstract**

The Database Relationship Analysis and Strategy Implementation Tool consists primarily of two separate components, namely an Event Detective System and a Strategy Management System. The Event Detective System creates an environment in which significant events within a data warehouse which create opportunities for the system user or the party of a data record can be detected, while the Strategy Management System determines and operationalizes appropriate strategies on the basis of the detected events. The implementation of the both these systems into a user environment provides the user with a consistent, systematic methodology for defining, investigating and implementing appropriate actions, based on events which are specific to a party.

## Description

The present invention relates to an database relationship analysis and strategy implementation tool and in particular, to a database relationship analysis and strategy implementation tool which provides the methodology to detect significant events within a data warehouse and to operationalise the detection of events and the assignment of appropriate strategies.

In many user environments, such as in retail and financial services, vast quantities of data is generated every day through normal operation of the busimess which represents a potentially invaluable source of information to the user concerned. Even when this data is captured and maintained in a database, problems have arisen in the filtering out relevant information from the huge volumes of data within the database warehouse that is being constantly updated and in the analysis of the significance of this information in the context of the user environment. In the retail and financial services environment,customers are traditionally treated in the context of a broad segmentation, each customer existing as a member of one or more segments with a plurality of similar customers. Hence, if a retail or financial institution wishes to impart information to a particular category of customers, an appropriate database tool is used to extract a segment of customers which satisfy particular relevant criteria.

For example, if a financial institution wishes to market a new investment product, the database tool may be used to extract all those customers having a certain minimum balance in their account at that time. Other static demographic criteria may also be applied. Details of the new investment product are then mailed to those customers or they are contacted in some other way. This is a simplistic approach which makes minimal use of the data within the customer database and in general, the responsiveness of customers has been invariably low. This is largely because the information reaching many of the customers of the segment is of no relevance to them at that particular point in time even though they may share some attributes with customers who would be intersted in the product and because this approach does not take inti account the importance of timing level. The traditional database tool fails to take into account the history or circumstances of the individual customers of the segment and although all the individual customers will have had that minimum balance required in their account at the time the segment is extracted, this does not necessarily mean that the customer is interested in buying the product in question.

In such environments, it is desirable that a more dynamic and individualistic approach be taken to database analysis and the subsequent actions of the user based on that analysis. A retail or financial institution requires regular monitoring of the details of customer records in its data warehouses on an individual basis so as to determine transactions, events and time frames which indicate the customer is in or is approaching a particular situation or is undergoing some change in circumstances which may warrant some action on the part of the institution. In many cases it is believed that the task of undertaking such analysis and the initiation of an appropriate strategy for millions of customers every daywould be impossible or just too costly. Changes in the circumstances and behaviour of a customer presents a brief window of opportunity for the institution. To act on these opportunities, it is necessary to identify that a change in circumstances has occurred or is about to occur, what that change in circumstances signifies and to instigate an appropriate action within a very short time span. For example, the fact that a customer moves to another employer in a different locality and has a significant salary raise presents new requiements for the customer. The customer may be interested in purchasing a new house which is more convenient to his new place of work and so require a mortgage, in starting a retirement plan or due to the salary increase, the customer may be interested in investment in other savings plans.

It is an object of the present invention to provide a database relationship analysis and strategy implementation tool which can effectively leverage the vast amount of accessible data within the operational and application systems of a particular environment so as to offer enhanced understanding, interaction and communication opportunities.

According to a first aspect of the present invention, there is provided a method of contacting parties, characterized by the following steps:
a) maintaining a vector management system, VMS;
b) obtaining leads from the VMS which identify parties to be contacted;
c) using the leads, making contact with parties; and
d) imposing the following limits on the contacts:
   i) a maximum limit on the number of times each party is contacted during any given calendar period; and
   ii) a minimum delay between one contact, and the next contact, of each party.

According to a further aspect of the present invention there is provided a method of communicating with parties, characterized by the following steps:
a) maintaining a database in which multiple data items are associated with each party;
b) selecting a data item, monitoring it over time and identifying changes which occur in it;
c) listing the parties associated with the changed data item;
d) dividing the listed parties into at least two groups;
e) repeating steps (b) through (d) at least once, with respect to at least one other data item;
f) contacting parties in the first group through a first type of communication channel, subject to the following limits:
   i) no party is contacted more than a predetermined number of times in any calendar period; and
   ii) after one contact of a given party, a subsequent contact is not made until a predetermined interval has expired.

According to another aspect of the present invention there is provided a method of communicating with parties, comprising the following steps:
a) maintaining a database in which
   i) a record is associated with each party, and
   ii) the records contain some common data items;
b) selecting a data item contained in multiple records;
c) monitoring the records containing the selected data item;
d) when changes occur in the selected data item, selecting a strategy from a group of strategies, said group of strategies including different communication tactics designed to influence behaviour of the parties;
e) listing the parties associated with the changed data item;
f) dividing the listed parties into at least two groups;
g) repeating steps (b) through (f) at least once, with respect to at least one other data item;
h) contacting parties in the first group through a first type of communication channel, and contacting parties in the second group through a second type of communication channel;
   i) a maximum limit on the number of times each party is contacted during a calendar period; and
   ii) a minimum delay between one contact, and the next contact, of each party.

An embodiment of the present invention will be described by way of example with reference to the accompanying drawings in which:-
Figure 1 is a block diagram representation of the the architecture of a financial services environment into which the database relationship analysis and decisioning tool of the present invention has been integrated; and
Figure 2 is a block diagram representation of a selection method of the present invention which describes the leads and the process by which the leads are determined to be candidates for a particular strategy.

The database relationship analysis and strategy implementation tool consists primarily of two separate components, namely an Event Detective System and a Strategy Management System. The Event Detective System creates an environment in which significant "events" within a data warehouse which create "opportunities" for the system user can be detected, while the Strategy Management System determines and operationalizes appropriate "strategies" on the basis of the detected "events". The implementation of the both these systems into a user environment provides the user with a consistent, systematic methodology for defining, investigating and implementing communications and other actions, based on "events" which are specific to a "party"

A "party" is any entity that can be identified from, and about whom information is stored within the data warehouse. In the database of a financial institution, the party will be a customer and may include an individual, businesses, households or joint account holders. No party information is directly maintained within the Event Detective or Strategy Management System. The data warehouse may also contain information (eg. information from a mailing list or obtained through market research) about parties that are not yet customers (prospects).

An "event" is an identifiable occurrence within the record of a party which indicates to the user that it is an appropriate time for a certain action to be taken by the user in relation to that party. For example, in a financial institution environment, the detected event may be that the customers salary is no longer being paid into his account which may indicate that the customer has been made unemployed. However, if this event is accompanied by another event such as an amount of money is being paid into the account from a different source, this may indicate that the customer has changed his job.

An "opportunity" is the possibility of generating value for the party and/or the user in the light of the detected event. In the above example, loss of employment may indicate a potential risk in relation to the cutomer due to the loss in income and may warrant close monitoring of the customer account or a direct communication to the customer requesting confirmation of his status. Similarly, change of employer may warrant marketing of certain new products to the customer as discussed earlier.

A "strategy" is defined as an ongoing process that selects the parties (data records) in a data warehouse that fit various profiles for the purpose of communicating relevant information or taking some other course of action. In a financial services environment, the parties are customers of a bank or other financial institution and the relevant information or action to be communicated may concern any aspect of financial products or services, financial or legal advice regulatory requirements or risk minimisation such as a credit block.

The database relationship analysis and strategy implementation tool allows a user to manage and control all strategies directed at the parties of the user's data warehouse by creating a list of strategy opportunities, tailored for action by specific distribution channel classes. The tool allows for individually tailored strategies and strategy process flows for each strategy opportunity. If communications are made with a party, the responses to activity are captured and then subsequent actions are determined by the party response (or lack thereof).

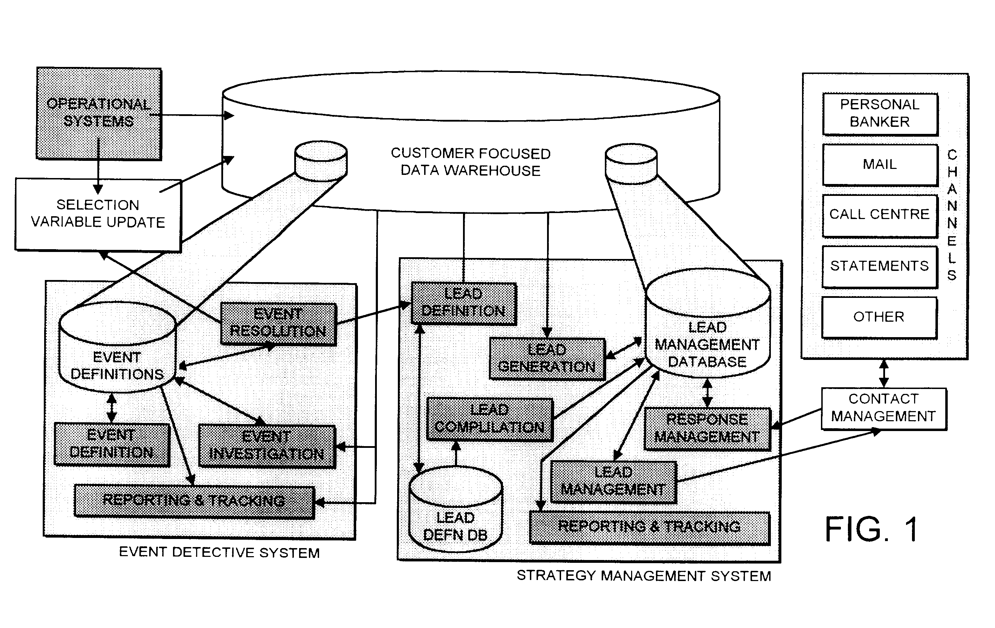

Figure 1 illustrates the architecture of a financial services environment into which the database analysis and decisioning tool has been integrated. The Event Detective System provides the methodology for determining the metrics required for selecting customers for certain types of actions or communications and results in recommended "calculations" that are stored in the data warehouse and are a component of a transaction update process. These "calculations" may be used as selection variables for various actions operationalized by the Strategy Management System. The Strategy Management System is an operational system that uses the customer centric data warehouse to select parties (i.e bank customers) that are suitable targets for various actions. The Strategy Management System must interface with the data warehouse from which it selects record subjects and with the Contact Management System(s) of the financial institution, (eg. call centre, mail, personal banker, etc.) in order to make the initial contact with, and to receive responses from the customers. The Event Detective System is independent of the Strategy Management System but is an important component of strategy control.

One of the goals of the Event Detective System is to track the life of an event through the detection process, through implementation and then triggering of customers so as to analyse the usefulness of the process.

In addition to the marketing and risk management opportunities discussed above, other areas in a financial services environment where customer "events" may be relevant include customer profitability, customer satisfaction or dissatisfaction or any other aspect of the bank/customer relationship. The process could be used very effectively for immediately identifying changes in the credit status of a party and for monitoring delinquent accounts. If the event detective methodology and process are implemented appropriately it may be able to identify a change in the risk profile of the customer at the earliest possible stage and take appropriate action by freezing the credit facility before it becomes a high credit risk for the bank or a major problem for the customer.

The structure and operation of the Event Detective System will now be described in detail.

The Event Detective System provides the methodology and the application for defining customer "events" which can be replicated through a systematic approach. The Event Detection methodology uses specified operating rules and parameters for timely identification of significant events where significance is defined in the context of previous behaviour of the individual customer rather than average or typical behaviour for a particular product or service. In addition to the events discussed above, other examples of events include a change of address, a significant account balance change, large transactions, a change of transaction volume, an opening or closing of an account, a salary payment start or stop, the starting or cancelling of standing instructions, pay-off balance inquiries, termination of loans or leases, an overdraft, maturing of term deposits, a change in the location at which transactions are conducted. These events may be identified through transactions or communications that may precede or accompany a change in the party's (i.e customer's) financial requirements or opportunities and may be used individually, or in combination to identify that contact with the party may be warranted. Events may also be indicators related to satisfaction with the financial institution, interest in competitive offers etc.

Event detectives are a sequence of scripts that are executed against the data warehouse at regular intervals, typically daily. The purpose of these scripts is to find significant events that have occurred specific to a party that may be of interest. An event detective is the process of combining data sources and operating rules in such a way as to end up with a set of event triggers that can be actioned by other operating processes.

The event detection methodology is supported by an application that leverages parallel processing capabilities in knowledge, discovery and data mining. The combination of the event detection methodology with ongoing data mining provides the basis for a learning environment that will grow in sophistication through experience, testing and improving rules and methods through time. This allows the financial institution to dynamically build individual customer models and identify changes to a record subject's profile through time. In other words, the Event Detective System provides a modelling methodology that supports a unique and differentiated level of observation, dialogue and responsiveness. The event detectives may also provide input for other processes such as strategies and models but are not strategies or models in themselves. A history of the event detective investigations is maintained in order to leverage the learnings from the hypotheses that are tested and to faciltate the incorporation of existing event detectives and their components into future event detectives.

Any table in the customer focussed data warehouse can be used as a data source for an event detective, including the tables of event triggers from other event detectives ie. the result of one event detective can be used as input to another event detective. For example, there may be two event detectives in place - a salary start detective and the other a salary stop detective. If there is a need to find those occasions where a salary start and a salary stop occur, then the salary start detective and the salary stop detective can be used as data sources for the salary start and stop detective. Other data sources may include the "normal" data warehouse tables like daily transaction and customer tables and summary tables that include data like average balance, minimum deposit etc. As a rule, if the data is in the data warehouse, then it can be used as a data source for an event detective.

A specified operating rule is the logic that defines part of the criteria for an event detective and includes the criteria for the detection of the event suspects as well as the criteria for evaluating the significance of the event for the associated record subject. For example, if an event detective is defined to detect significant large deposits, then a possible operating rule to detect the event suspects might be that there is a deposit of at least $15,000. To then evaluate the significance of the deposit there are may possible operating rules that can be used, either in isolation or in combination. Examples include that the amount of the deposit is greater than the previous maximum deposit, that the deposit is 30% greater than the average monthly deposit for the last 6 months, that the deposit is more than 1.5 standard deviations above the average deposit, that there is no withdrawal that matches the amount of the deposit, that the deposit is not a balance pay out for a loan, that no deposit of a similar magnitude has occurred within the last 12 months or that the deposit is not into a term deposit account etc.

Each operating rule uses parameters that qualify the rule. In the above example, the initial business rule had a parameter that the deposit value must be greater than $15, 000, while the other operating rules had parameters like standard deviation greater than 1.5, no previous deposit within 12 months. Some operating rules may use more than one parameter, and likewise, a parameter can be used by more than one operating rule. However, a parameter only has an affect on the operating rules within one event detective.

Many of the operating rules within an event detective do not create a list of event triggers. In fact, only one operating rule per event detective does create a list of event triggers. Operating rules both act on a data source to define a list of event suspects, and then act on the list of event suspects to successively filter the event suspects down to a list of event triggers. Each operating rule that creates a list of event suspects or filtered event suspects stores its result set in a temporary table.

The temporary table is only accessible within the event detective that defines it. This means that no other process (including other event detectives) can use the temporary table as a data source. The table is only populated for as long as it takes to run the event detective that it is associated with. If the deductive method of another event detective finds that the temporary table is useful, then the user must define a new event detective that does the part of the process up to populating the temporary table required, and then redefine the original event to use the new event detective as a data source. This has no material impact on the outcome of the original event detective, but does maximise the reusability of processing that occurs.

The pool of events (with the associated party) that are the result of the execution of the event detectives are the event triggers. The event triggers include all information about the record subject and the event being detected that may be required for other operating processes or modelling activities.The event detection methodology does not make any judgement about the usefulness of the detection of the event at all. The usefulness of the detected event is determined by the fact that another operating process accesses the event triggers. The list of event triggers is the event pool which is simply the pool of results that is the outcome of the event detection process. The event triggers are actually contained within a table in the record subject focussed data warehouse. Each event detective has its own table. Other event detectives can use the event pool as a data source for their own purpose.

The event process is the combination of data sources, operating rules, temporary tables and event triggers combined in an appropriate manner to define the event detective specified in the definition phase. An event detective is implemented by the event process. The success or otherwise of the event detective is governed by the appropriateness of the event process being used.

There are four major functional components within the Event Detection Methodology:
**Event Definition**
**Event Investigation**
**Event Resolution**
**Event Trigger Tracking and Reporting**
Each component is broken down into activities, each activity having a set of related tasks. A task has associated documents which could include interview results, findings of the analysis (both successful and unsuccessful), forecast statements and results. Some tasks will also have associated scripts which are the pieces of processing logic (SQL queries and Multiload jobs for example) that actually detect the event.

Event Definition is targeted at the systematic identification and validation of events, activities or transactions that may precede or accompany a targeted opportunity. These events, activities or transactions may be defined through knowledge of the environment, experience or data mining. This Event Definition is the infrastructure for maintaining the documentation of assumptions, selection criteria, operating rules and forecasts for the events that may identify an opportunity that has been determined through an information gathering process. This component includes templates for specification of parameters (including what parameters to use and how to use them), recommended tables for initial implementation, operating environment and a method for tracking and validating the effectiveness of the defined events in identifying actionable opportunities through interaction with other tools.

The Event Investigation component builds the process that the event detective will use in order to detect event suspects and validate that the event is significant for a particular party (i.e customer of the financial institution). An event is validated as a significant event based on history, seasonal or cyclic patterns etc. for this specific record subject (i.e. it is the process of comparing the event to the operating rules defined in the pre-processed record profile). A validated significant event is no longer an event suspect, it is an event trigger. There are two ways that an event may be created, both of which are supported by the application. One method is an inductive method which builds from a process to a premise and the other is a deductive method which builds from a premise to a process. For example, an inductive method would start with a process like - find all occasions where a salary payment start occurs within 15 days of a salary payment stop, and then try to attach an operating value premise to the result. A deductive method would start with an operating value premise like - it is probably useful to be able to detect those records which indicate that a new job has been started, and then try to attach a process to the premise. In reality most event detection will be a combination of the two methods. The deductive method relies on the ability to reuse processes and tables from other event detectives that have been created.

The inductive method comprises the activities by which the process of detection for the new event detective is built. It combines data sources and operating rules in a way that results in the desired event triggers being detected. Invariably, part of the inductive method will involve comparing the event suspect with the associated party profile in order to determine the significance of the event. For example, in order to determine whether a deposit of greater than $10,000 is significant for a particular record, it may be compared to the previous maximum deposit made. The previous maximum deposit would have been pre-calculated to allow for simple processing during event detection.

The deductive method leverages off the work that others have done previously in order to determine what other parties have been found of a similar nature. For example, consider a premise that it is important and useful to find those parties who have started a new job. The following concepts may indicate a new job; a salary change, the fact that there was an old job, an employer change, a deposit change (e.g. change of source, change in amount, change in frequency of payment or a change in location), a change in the most popular automated teller machine (ATM) usage between 8am and 6pm on weekdays and a change in bank branch usage.

By searching the existing event detectives for others that use the same concepts, the user may get an understanding of how other users have approached similar tasks, or in fact, find that the event detective required has been created previously. The deductive method will most often result in the inductive method taking place.

The event detective methodology has a task to explore the reuse potential that exists in other event detectives, thereby supporting the deductive thought process. The methodology ensures that the experience of defining events is captured and able to be reused both within and between operating environment sites. It also introduces rigour to the event detection and data mining process.

Regardless of how the user approaches the event detective creation, there is a need to actually build a process for event detection.

The Event Resolution component addresses the resolution phase of the event detective. The resolution may range from the event detective proving not to be valuable enough to detect through to the event detective being extremely valuable to the operating environment (i.e the financial institution), and so must be implemented into the environment as soon as possible.

The Event Trigger Tracking and Reporting component ensures that adequate information is captured within the system to allow appropriate management reports to be generated.

The structure and operation of the Strategy Management System will now be described in detail.

The Strategy Management System selects parties from a list of all parties who meet a set of criteria and passes the leads to channel instances who then make contact with the data subjects and manage the responses therefrom. The Strategy Management System requires the data entities within both a Lead Management and a Lead Definition database and these are either replicated or integrated with the data warehouse. In the Lead Management database, the tables LEADS, LEAD_HISTORY, STRATEGIES, COMPLAINTS, MORE_INFO_REQUESTS and UNREALISED_OPPORTUNITIES in particular must be included in the data warehouse as they all describe the management of the relationship with the party.

The Strategy Management System is a lead definition, generation, allocation and response management application. In a financial services environment, it supports a bank-wide integrated approach to the planning and offers unique capabilities for rapid identification of customer opportunities and effective deployment of the bank's communication strategies to address those opportunities. The system provides a flexible platform designed to support high volumes of concurrent strategies across multiple channel classes.

A strategy may be a communications tactic that will be used to contact the customer with a particular objective in mind or some other action to be taken by the user. The components of a strategy a selection method, the frequency of execution, the duration of the strategy etc. For each strategy, the class of the strategy (eg. Risk, Event, Information, Activation, Prospect etc) and/or limits regarding the frequency or the volume of contact (eg. do not contact a customer more than 8 times per year or within 30 days of last strategy) are defined. Strategy classes may also be subclassed to more finely define and group strategies or leads. A cell is defined as a random set of the strategy leads. A strategy must have at least one cell, but may have more than one. If a strategy includes more than one cell, then there is something different about the way each subset of leads is managed within the strategy (eg. the channel class used, the offer or the collateral used within the channel class etc.) A cell is not differentiated from other cells because of the segment being addressed since segment type information is managed by the selection method

The Strategy Management System consists of seven major functional components:
**Lead Definition**
**Lead Generation**
**Lead Allocation**
**Lead Management**
**Response Management**
**Reporting and Tracking**
**Utilities and Housekeeping**

The Lead Definition component provides the infrastructure for maintaining the documentation of assumptions, selection criteria and forecasts for the leads generated for targeted communications and incorporates the interface of research, design and prototyping.

The Lead Generation component cooperates with the database administrator for the extraction of customer information from the party focussed data warehouse, for replication into the lead management database. This component builds and runs the selections.

The Lead Application component works side by side with the Lead Generation component and focuses on allocating the generated leads to the nominated communication channel classes. This component performs party, channel instance and strategy limiting and loads the leads into the lead management database for distribution to a Contact Management System(s).

The Lead Management component performs the maintenance of the leads, including lead table updates, lead history table updates, step update files, time out leads etc.

The Response Management Component obtains responses from the Contact Management System(s), including expected responses, requests for information and complaints. The Response Management function will include a capability for the manual and automated entry of customer responses to allow for the high variability of response capture across banks, as well as within each Contact Management System.

The Reporting and Tracking component provides the ability to perform tracking and reporting of strategy classes, strategy sub-classes, strategies, cells, steps, responses (including complaints and requests for more information) and leads (including unrealised opportunities and control group leads), including the status, performance and disposition of leads. The Strategy Management interface does not provide the presentation layer for any reporting requirements but ensures that adequate information is captured and maintained within the system to allow appropriate reports to be generated by other tools.

The Utilities and Housekeeping component manages the regular housekeeping tasks that need to be conducted to keep the application manageable and relevant. These tasks are not operational tasks and include the archiving of old Leads, Control Groups and Unrealised Opportunities. Utilities are one time or repeat processes to perform specific adhoc activities in initial set-up of a system (e.g. Response Actions Creation ) and to refresh the system as required.

A selection method is the query that runs against the database to select leads for a strategy and comprises three main components - the scoping variables, the lead identifier and the selection variables.

Scoping variables are essentially the WHERE clause of the SQL used to generate leads and may be stored data within the database, or derived from data stored within the database. The application of the scoping variables effectively defines the segment that the strategy is targeting and defines the qualification criteria that a customer must meet to be selected within the strategy. Each customer that meets the criteria will become a record in the strategy and each record that is part of the result set is a lead database. There is no limit to the number of scoping variables in a selection method.

The lead must be uniquely identified across all strategies and all strategy iterations. This unique key would typically be the PARTY_ID PARTY_TYPE, STRATEGY_ID and SELECTION_DATE. The data elements that are selected for the lead are called selection variables and are the variables that are used to describe desirable attributes of the lead for the purposes of the strategy. Like scoping variables, they may be stored or derived values. The scoping variables used do not need to be included in the selection variables, nor do the selection variables need to be included in the scoping variables. However, the scoping variables are commonly included in the selection variable set. The selection variable values may provide useful background information and context for the channel instance making the contact with the customer to help identify why this customer was considered to be a candidate for this strategy. The number of selection variables per selection method is set to a predetermined maximum (e.g. ten) which means that it may not be possible to include every scoping variable in the selection variable set. The selection variables do not have to include contact information (i.e any information that needs to be provided to actually make the contact with the customer, as well as any background information on the customer that may be useful to the channel instance). For example, if a lead is to be directed to a personal banker then the contact information would include the name and phone number of the customer to be contacted as well as relevant account information. The contact information is determined at the time of delivering the lead to the channel instance by joining the lead to the customer table rather than as part of the selection method. However, if some aspect of the contact details are to be used as a scoping variable (eg. Customer Address falls within post code x) then it may be part of the selection variable set so as to highlight to the channel instance making the contact why the customer was selected for this strategy. Any information within the data warehouse may be passed to the channel instance if it is deemed important.

The combination of scoping variables, selection variables and leads makes the selection method which describes the leads and the process by which the leads were determined to be candidates for the strategy. Each strategy has one and only one selection method but a selection method may be used in more than one strategy. On defining a strategy, the scoping variables and the selection variables that comprise the selection method for the strategy are defined. This is the decision as to what data elements will be important to provide context and description of the lead to all channel classes.

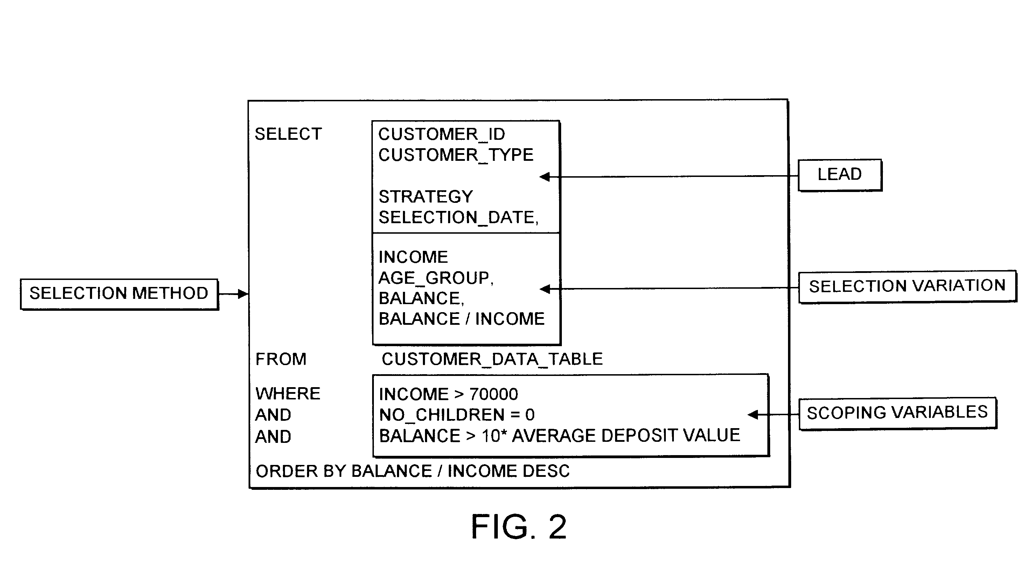

Referring to the selection method represented in Figure 2, the data element INCOME is used as both a scoping variable and a selection variable. The actual value of INCOME (eg. $75,320 per annum) is quite possibly irrelevant to the channel instance without the context of the relevant range ie. that it is greater than 70000. This implies that there is a requirement to provide the selection method to the channel class, in combination with the selection variable values generated for the lead.

Selection variables may also be used for the allocation of leads to different cells within a strategy. As an example, consider a strategy with two cells, each cell using a different channel class - one personal banker, and the other call center. The allocation of a lead to each cell may be based on the value of the selection variable INCOME. INCOME as a scoping variable is limiting leads to those with values greater than 70000, but as part of the definition of the strategy all leads with an INCOME greater than 120000 are to be to the personal banker cell, while all others (INCOME between 70000 and 120000) are to be allocated to the call center cell. This requires the creation of two very similar strategies where the selection method differs only by the application of the scoping variable INCOME. One strategy would limit leads to those with INCOME values between 70000 and 120000, while the other strategy would limit leads to those with INCOME values greater than 120000. Only one strategy with the appropriate selection method need be developed, and then the strategy copied and the selection method changed.

Leads are allocated to cells based on a simple random algorithm (a variation of the Monte Carlo algorithm) which randomly allocates leads to cells on a weighted basis.

Each component process of the strategy is called a step and each step is associated with a channel class, messages, responses and actions. An action will indicate what the next step of the strategy is for the lead being actioned. Some actions can be automated by having a time based event (or time out) associated with the action ( eg. automated transfer of a lead to the call center channel class five days after the mail out has been sent). The channel class designates the class of communication to be implemented for the step (eg. mail, personal banker, call Center, automated teller machine (ATM) etc.). Each step can have only one channel class associated with it. The channel class instance is the actual means of making contact with a customer (eg. name of the personal banker, work-station within the call center, ATM number etc.).

The lead being managed within a strategy are the result of the application of the selection method for the strategy and are the unique identification of a customer within a strategy. There are two exceptions to the selection method that change the way in which leads may or may not become part of the strategy. The first exception is a seed list for inclusion in various steps of a strategy. This is a list of individuals or entities that will be included in the execution of a step of a strategy regardless of the selection method and any limiting (either by customer or by channel class). A typical use of a seed list is as a list of employees that are included in a step of a strategy to ensure that contact call centers or mail centers are actually making the contact. Multiple seed lists (per channel class, per strategy class etc) may be provided. The second exception to the selection method is an exclusion list (i.e a list of customers that have requested that they not be contacted and so must not be included in the strategy). An exclusion list would typically contain the customer identifiers of those customers who had requested that they not be sent unsolicited promotional mail. The use of the exclusion list is made at every iteration of the strategy and before any limiting has occurred. It is used at the lead generation time, and also each time a lead is stepped within the strategy so as to ensure that if a customer contacts the bank independently of the strategy and asks not to be contacted, then that customer should not be contacted for strategies already running.

There are three types of leads that can be associated with a strategy : active leads, unrealised opportunities and control group leads.

Active leads are those that have successfully passed through a customer limiting process and are being managed within a channel class, depending on the step within the strategy the lead is currently in.

An unrealised opportunity is either a lead that has not been allocated to a channel instance as a result of the limiting process or a lead that has timed out and been sent to an unrealised opportunity list. Reasons for unrealised leads may be that contact for this strategy is too close to a previous strategy, that there have been too many contacts with this customer in the last 12 months, that the customer was selected for more than one strategy today, that the channel instance that this lead was directed to had too many leads, that too many leads were generated for this strategy today, that the channel instance that this lead was directed to was on hold or that the channel instance that this lead was directed to was closed. The lead identifier (STRATEGY_NO, CUSTOMER_NO, CUSTOMER_TYPE, SELECTION_DATE) and the REASON that the lead was unrealised are recorded, along with the selection variable values for the lead. The reason for capturing unrealised opportunities separately is to gain visibility of those customers that meet the selection criteria for a strategy but for some reason are unable to be appropriately managed within the strategy. In those cases where the channel instance is unable to accept the lead, the lead may be cascaded to an alternative channel class, typically a channel class with much larger capacity instead of sending the lead to the unrealised opportunity table. For example, if a lead was selected in a strategy, and the strategy tries to allocate the lead to a personal banker, but the personal banker is at capacity, a decision must be made as to whether it is useful to redirect the lead to the call centre or mail where the lead may not get the attention it deserves or to redirect the lead to the unrealised opportunities table. Directing a lead to the unrealised opportunities table allows the cause of leads not being actioned in the way the strategy intended to be analysed. By this analysis it may be found that the personal banker channel class is under staffed. It may even be possible to define a strategy that uses the unrealised opportunities table as its data source, thereby reconsidering those leads that failed to be actioned in the original strategy.

A lead cannot become unrealised through a positive action on behalf of a channel instance but only through the limiting process or the fact that the lead has timed out within the step (considered a passive action). This means that every action that a channel instance can make on the lead must be a positive action resulting in a known status.

A reconsideration process for unrealised opportunities is carried out at subsequent iterations of the strategy and the rules that re-consider unrealised opportunities may be different for each reason that the lead became unrealised. For example, if the lead became unrealised because the volume of contact was too high for the customer within the last twelve months, then the lead should probably not be re-considered at the next iteration. However, if the lead became unrealised because of the limit on the number of leads generated each day, then the lead should be re-considered at the next iteration.

Control group leads within a strategy allow the use of a control group of customers to help ascertain the effectiveness of the strategy. The method of using control groups ensures that the control group is not contacted for any strategy whatsoever, thus allowing the true impact of the strategy to be judged. However, the method does not ensure that any customers will be selected for the strategy that are also members of the control group. This means that it may not be possible to compare control group leads with active leads when trying to determine effectiveness. If a subset of customers that qualify for the strategy as a control group is to be used, then a cell of the strategy may be implemented as the control group. This allows more accurate analysis of the effectiveness of the strategy amongst potential targets, but does not ensure that no other strategy contacts the customer.

The Strategy Management Tool is capable of applying limits to the allocation of leads within a strategy. Limiting is designed to achieve three things: to ensure that the customer is not over contacted, to ensure that channel instances do not have so many leads allocated to them so as to exceed the capacity of the channel instances, and to ensure that the strategy budget is not exceeded because too many leads are generated. If, as a result of limiting, the lead can not be allocated to the intended channel instance, the lead may be assigned to the unrealised opportunities table or the lead may cascade from the intended primary channel class to a secondary overflow channel class.

Three categories of limiting are possible: customer limiting, strategy limiting and channel instance limiting. The order in which these limits are applied has no bearing on the result but will affect the amount of processing that has to be done. The following order of application is desirable:
1. customer volume limiting and customer recency limiting occur concurrently;
2. strategy iteration limit, strategy total limit, channel instance new leads limit, channel instance outstanding leads limit, strategy cascade channel instance new leads limit and strategy cascade channel instance outstanding leads limit occur concurrently

After customer limits have been applied, there is a list of leads that are sorted in some order, even if the order is arbitrary. The strategy limits and channel instance limits apply to the set of customer limited leads such that the first leads in the list are tested against the strategy and channel instance limits first. This means that the first lead in the list will have the best chance of being allocated to a channel instance. For example, if after customer limiting is applied there are 2,000 leads still able to be allocated, but there is a limit of 1,500 leads generated per strategy cycle, then the first 1,500 leads are the ones that get past the strategy limiting, not an arbitrary 1,500. If no lead is more important than any other lead within the strategy, then the selection method does not need to use an order, so the first leads are essentially randomly selected.

There are two types of limits that can apply to customers, a recency limit and a volume limit. The recency of contact limit is defined at the strategy class level and applied to the customer level while the volume of contact limit is defined at a system level. On defining a strategy, the use of customer limits defined in the system may be overridden (ie. customer limiting will not be taken into consideration when generating leads for the strategy). The option to override customer limiting can be set at a strategy class, strategy sub-class, channel class, strategy levels and customer segment. However, it is not possible to only override recency or to only override volume; both recency and volume limits may be overridden.

Recency of contact can be managed by the proximity of one strategy to another strategy. There is a table CAMPAIGN-CLASS-LIMITS that defines the minimum proximity between two strategy classes. A customer should not participate in two strategies within this defined proximity. The CAMPAIGN-CLASS-LIMITS table is a matrix that relates two strategy classes together such that a time limit is defined between the running of two strategies.

The volume limit controls the number of contacts with the customer. It is the maximum number of strategies that a customer may be selected to participate in over a rolling twelve month period, and is set at a system level. By default, every strategy will count towards this limit, but it is possible to define the strategy to not count towards the volume limit (eg. An information strategy may not count towards the volume limit). It should be noted that this is not a limit on the volume of contacts - a lead may be contacted many times within a strategy. It is a limit on the number of times a customer can be selected for different strategies.

Each strategy may have two sets of two volume limits applied to it. One set is for the primary channel class, the other is for the cascade channel class. The first limit within each set is a limit on the total number of leads that can be generated for the strategy across all iterations of the strategy while the second limit is a limit on the number of leads per iteration of the strategy. Both these limits are implemented as upper boundaries as an absolute number (not a relative number). It is not mandatory for a strategy to have these limits applied to it. All of these limits are defined at a strategy level. If a strategy does not have volume limits defined then it is an unlimited strategy, rather than a strategy that overrides limiting. It is not possible to override strategy limits, nor does it make sense to do so; the strategy may be defined as unlimited if this is the desired result.

At the channel instance level it is possible to define two limits. The first limit is the total number of leads that can be allocated to the channel instance at any one time across all strategies while the second limit is a limit on the number of leads that can be allocated to the channel instance in any one cycle of all strategies. These limits ensures that a channel instance does not get too many new leads at a time, and also that there are not too many leads allocated to a channel instance for follow up at any given time. Both these limits are implemented as upper boundaries as an absolute number (not a relative number). It is not mandatory for a channel instance to have these limits applied to it. The channel instance limits are applied and managed at the channel instance level, but are inherited from the channel class when the channel instance is defined. A strategy that is unlimited should not direct its leads to channel instances that are limited. It is not possible for a strategy to override channel instance limiting.

Channel instance limits are only taken into consideration when generating and allocating new leads. If the action of a step is to assign the lead to a channel instance that has limiting applied to it, and the channel instance is at full capacity, the lead will be successfully allocated to the new channel instance. This will mean that the channel instance is over capacity, and will probably not be able to cope with all the leads assigned to it (and certainly not any new ones). For this reason, consideration must be given to this situation when defining the channel instance limits to ensure that there is in fact some spare capacity when the limits for the channel instance have been reached.

If the primary (intended) channel class for the allocation of leads is at full capacity, the Strategy Management System supports a one level cascade to a secondary channel class. If the secondary channel class is also at full capacity, then the only action is to make the lead an unrealised opportunity. The secondary channel class must be nominated for the strategy, as the system will not make the decision itself. If no secondary channel class has been defined then the lead will become an unrealised opportunity. Cascading is supported for each iteration of a strategy. There is only one cascade channel class per strategy. Cascading is only supported for the first step of each cell during the lead generation and allocation process, not at any subsequent steps.

If a lead is allocated to a channel instance with insufficient capacity to handle the lead, allocating it to another channel class may not be a desirable result. For example, if a newly generated lead is intended to go to the Personal Banker channel class but the Personal Banker channel instances are at full capacity. It may be more desirable to send the lead to the UNREALISED_OPPORTUNITIES table rather than to overflow the lead to an alternate channel class. The UNREALISED_OPPORTUNITIES table is available for analysis to determine what sort of opportunities are being missed. The analysis performed on this table may result in new strategies being targeted at customers that were limited out, changes in strategy strategy to ensure that the frequency and volume of contact is kept to a level that minimises the likelihood of leads being unrealised and an investment being made in the channel class to increase the capacity of the channel class (eg. extending the Call Center office space).

Dynamic scoring is a process that takes place as part of the generation of leads. It is essentially a process that is either too costly or complex to run for the whole customer base, but is important to run for a targeted subset of the customer base. The targeted subset is essentially all leads that are selected when the selection method is executed. Once the customer limiting has been performed, and before either strategy or channel instance limiting, these models are run for the lead set. As a result of the models being run, the lead set may be re-sorted, or new selection variables may be added to the lead. It is important that the original selection variables are not overwritten.

Within a strategy there are two types of communication from a lead that are treated specially. They are a request for more information and a complaint. These two responses are identifiable and are placed in separate tables to other responses, namely the COMPLAINTS and MORE_INFO_REQUESTS tables. These tables both contain the lead identifier and the selection variables associated with the lead in the strategy so that analysis can be conducted on these response types. The analysis may find that there are particular strategies or channel instances for example that generate more requests for information or complaints than others. The tables also provide the ability to act on the request for information or complaint. A fulfilment process may be implemented against the MORE_INFO_REQUESTS table, and a complaint management system may use the COMPLAINTS table for input.

Use of the database database relationship analysis and strategy implementation tool analysis, decisioning and implementation tool in a financial services environment allows the financial institution to apply the tool on a regular basis (eg every night) so that relevant events occuring among its customers may be detected by the Event Dectective System. A decision as to what strategy should be implemented in relation to those customers is made by the Strategy Management System and implementation instructions are given to the appropriate channels. In other words, the database analysis, decisioning and implementation tool informs the financial institution which of its customers is it important to take action in regard each day, the reason why action is necessary, the action to be taken and how it should be implemented. This ensures that the window of opportunity in relation to individual customers is captured and timely action is enabled. The database analysis, decisioning and implementation tool leverages the intimate customer data within the data warehouses of the financial institution so enhancing its understanding of the requirements of its customers and identifying opportunities or the necessity to take some other actiom in relation to its customers.

Although, the database relationship analysis and strategy implementation tool analysis implementation tool has been described in relation to the environment of a financial institution, the tool can be used in other environments. For example, in the retail sector, the tool may be integrated into the customer database environment of large supermarket chains, department stores or airline companies so allowing such institutions to detect relevant events in relation to their customers and to decide on and implement appropriate strategies on the basis of the detected events. The tool could also be used in a database environment which contains records relating to convicted or suspected criminals so as to detect events which may be useful in solving crime.

## Claims

1. A method of contacting parties, characterized by the following steps:
a) maintaining a vector management system, VMS;
b) obtaining leads from the VMS which identify parties to be contacted;
c) using the leads, making contact with parties; and
d) imposing the following limits on the contacts:
i) a maximum limit on the number of times each party is contacted during any given calendar period; and
ii) a minimum delay between one contact, and the next contact, of each party.

2. Method according to claim 1, further comprising the step of placing a limit on the number of leads used to contact the parties.

3. A method of communicating with parties, characterized by the following steps:
a) maintaining a database in which multiple data items are associated with each party;
b) selecting a data item, monitoring it over time and identifying changes which occur in it;
c) listing the parties associated with the changed data item;
d) dividing the listed parties into at least two groups;
e) repeating steps (b) through (d) at least once, with respect to at least one other data item;
f) contacting parties in the first group through a first type of communication channel, subject to the following limits:
i) no party is contacted more than a predetermined number of times in any calendar period; and
ii) after one contact of a given party, a subsequent contact is not made until a predetermined interval has expired.

4. Method according to claim 3, and further comprising the step of placing a limit on the number of contacts made through the first communication channel.

5. Method according to claim 4, further comprising the step of placing a limit on the number of contacts made through the second channel.

6. Method according to claim 5, further comprising the step of contacting some parties in the first group through the second channel, if the number of parties in the first group exceeds a limit.

7. Method according to claim 3, further comprising the step of placing a limit on the number of parties in the first group who are contacted.

8. A method of communicating with parties, comprising the following steps:
a) maintaining a database in which
i) a record is associated with each party, and
ii) the records contain some common data items;
b) selecting a data item contained in multiple records;
c) monitoring the records containing the selected data item;
d) when changes occur in the selected data item, selecting a strategy from a group of strategies, said group of strategies including different communication tactics designed to influence behaviour of the parties;
e) listing the parties associated with the changed data item;
f) dividing the listed parties into at least two groups;
g) repeating steps (b) through (f) at least once, with respect to at least one other data item;
h) contacting parties in the first group through a first type of communication channel, and contacting parties in the second group through a second type of communication channel;
i) a maximum limit on the number of times each party is contacted during a calendar period; and
ii) a minimum delay between one contact, and the next contact, of each party.

9. Method according to claim 8, further comprising the step of contacting some parties in the first group through the second channel, if the number of parties in the first group exceeds a limit.

10. Method according to claim 8, further comprising the step of placing a limit on the number of parties in the first group who are contacted.
